# DEMANDE DE BREVET EUROPEEN

(11) **EP 1 320 138 A1**
(43) Date de publication de la demande: **18.06.2003**
(21) Numéro de dépôt: 02292888.1
(22) Date de dépôt: 21.11.2002
(51) Int. Cl.: H01M 2/10, H01M 6/44, H01M 10/50

(54) **Module de générateurs électrochimiques**

(30) Priorité: 13.12.2001 FR 0116110
(71) Demandeur: ALCATEL, 75008 Paris (FR)
(72) Inventeur: Gaignerot, Laurent, 33600 Pessac (FR); Rigobert, Gérard, 33370 Fargues St. Hilaire (FR); Jonac, Philippe, 33170 Gradignan (FR)
(74) Mandataire: Sciaux, Edmond

(57) **Abrégé**

La présente invention a pour objet un module comportant au moins deux générateurs électrochimiques placés dans une enveloppe commune, ladite enveloppe comprenant :
- un fond (1) comprenant au moins deux ouvertures (2) de dimension au moins égale à la taille desdits générateurs et un moyen de fixation desdits générateurs dans lesdites ouvertures,
- un corps intermédiaire (20) comprenant des logements pour recevoir lesdits générateurs,
- une plaque (40) pour le raccordement électrique desdits générateurs, et
- un couvercle (50) de protection.

## Description

La présente invention se rapporte à un module composé d'au moins deux générateurs électrochimiques juxtaposés et placés dans un boîtier. Ces générateurs électrochimiques peuvent être des générateurs primaires ou secondaires, des générateurs à électrolyte aqueux ou non-aqueux. Par exemple ce peut être des générateurs à électrolyte alcalin comme les générateurs nickel-cadmium ou nickel-métal hydrurable ou bien des générateurs au lithium comme les générateurs lithium-ion. L'invention s'étend en outre au procédé de fabrication de ce module. De manière préférée les générateurs sont des générateurs lithium-ion. L'invention concerne plus particulièrement des générateurs de forme cylindrique, mais pourrait également s'appliquer à des générateurs de forme allongée à section carrée, rectangulaire ou ovale.

Plusieurs générateurs peuvent être juxtaposés et entourés d'une enveloppe commune protectrice pour former un ensemble appelé module. Ces modules sont à leur tour susceptibles d'être assemblés en batterie, notamment en vue de leur utilisation dans un véhicule électrique. Plusieurs solutions ont été proposées pour la réalisation de tels modules.

Le document EP-0 607 675 décrit une batterie compacte de générateurs électrochimiques cylindriques comportant une structure en nid d'abeille destinée à recevoir les générateurs. Les générateurs sont étanches, et les alvéoles formées d'un matériau flexible et élastique sont ouvertes à chaque extrémité, de telle sorte que le refroidissement peut s'effectuer par circulation verticale entre les générateurs de l'air venant de l'extérieur. Une fois placés dans les alvéoles, les générateurs sont raccordés électriquement deux à deux.
La structure proposée dans ce document a une tenue mécanique insuffisante pour assurer le maintien et la protection des générateurs dans un environnement mécaniquement exigeant. En outre la fabrication d'une telle batterie comporte de nombreuses opérations, en particulier pour le raccordement électrique des générateurs.

Le document JP-11 001 126 décrit une batterie comprenant des modules de plusieurs générateurs électrochimiques cylindriques. Chaque module comporte une structure composée de deux coques s'appliquant l'une sur l'autre pour former des alvéoles à section octogonale fermées à chacune de leurs extrémités par un capot commun. L'un des capots comporte des orifices permettant le refroidissement par circulation de l'air extérieur. Une fois placés dans les alvéoles, les générateurs sont raccordés électriquement deux à deux.
L'assemblage de la structure et le raccordement électrique des générateurs nécessite de nombreuses opérations.

Le document FR-2 774 514 décrit un module de plusieurs générateurs électrochimiques cylindriques. Les bornes portées par les générateurs sont reliées électriquement par des connexions raccordées à une carte électronique. La juxtaposition des générateurs laisse des vides dans lesquels peuvent être insérées une ou plusieurs cartes électroniques. L'ensemble des générateurs est entouré d'une chemise à paroi creuse à l'intérieur de laquelle circule un liquide caloporteur. Deux capots recouvrent les extrémités du module.
Le raccordement électrique des générateurs entre eux et à la carte électronique comporte plusieurs opérations successives qui peuvent être complexes. En outre les générateurs sont simplement insérés dans leur logement mais leur fixation à l'intérieur de ce logement n'est pas assurée.

A cette fin la présente invention propose un module comprenant plusieurs générateurs électrochimiques réunis dans une enveloppe de manière à ce que le maintien et la protection des générateurs à l'intérieur de l'enveloppe soit au moins équivalent aux solutions antérieures avec une facilité d'assemblage améliorée.

L'objet de la présente invention est un module comportant au moins deux générateurs électrochimiques placés dans une enveloppe commune, ladite enveloppe comprenant :
- un fond comprenant au moins deux ouvertures de dimension au moins égale la taille desdits générateurs et un moyen de fixation desdits générateurs dans lesdites ouvertures,
- un corps intermédiaire comprenant des logements pour recevoir lesdits générateurs,
- une plaque pour le raccordement électrique desdits générateurs, et
- un couvercle de protection.

La présente invention présente de nombreux avantages. D'une part la tenue mécanique du module est renforcée car les générateurs électrochimiques sont fixés au niveau des ouvertures du fond à l'intérieur des logements qui leur sont destinés. D'autre part le nombre de pièces composant l'enveloppe est faible, et ces pièces sont faciles et rapides à assembler. En particulier le raccordement électrique des générateurs s'effectue en une seule opération consistant en la pose d'une plaque comportant toutes les liaisons électriques et les composants électroniques nécessaires au fonctionnement du module. Grâce à l'invention les opérations d'assemblage peuvent être automatisées. Ainsi le temps et le coût de fabrication du module selon l'invention sont notablement réduit.

Le fond est constitué d'un matériau polymère. Il porte des ouvertures traversantes, de préférence circulaires, dont le diamètre intérieur est proche du diamètre extérieur des générateurs électrochimiques cylindriques qui doivent y prendre place. Les générateurs ont de préférence la forme d'une colonne dont la section peut être par exemple circulaire, carrée, ovale ou rectangulaire. La forme des ouvertures est adaptée à la section des générateurs. Selon un mode particulier de réalisation, ledit moyen de fixation comprend une sangle et des moyens de serrage de ladite sangle, et de préférence encore lesdits moyens de serrage comprennent au moins une entretoise, fixée sur le fond, et au moins une vis.

De manière commode le corps intermédiaire est formé de deux coques, en matériau polymère, qui sont assemblées préalablement à l'introduction des générateurs pour ne constituer qu'une pièce. Avantageusement ledit corps intermédiaire comprend des moyens de régulation de la température desdits générateurs. Selon un premier mode de réalisation, lesdits moyens de régulation de la température comprennent la circulation d'un fluide caloporteur à l'intérieur d'un espace fermé disposée dans le corps intermédiaire. La circulation du fluide caloporteur peut s'effectuer dans un espace réservé placé entre les générateurs ou bien dans la double paroi constituant l'enveloppe externe du groupe de générateurs, par exemple un dispositif analogue à celui décrit dans le document FR-2 761 203. Selon un autre mode de réalisation, lesdits moyens de régulation de la température comprennent un flux d'air circulant entre les générateurs à l'intérieur dudit corps intermédiaire.

La plaque de raccordement en matériau polymère est destinée à assurer la continuité électrique entre les électrodes contenues dans les générateurs et un dispositif extérieur. La plaque porte des contacts électriques qui sont raccordés aux bornes, de polarité respectivement positive et négative, situées sur la face supérieure des générateurs électrochimiques. Des cartes électroniques destinées au contrôle des différents paramètres de fonctionnement du module sont insérées dans cette plaque. Un couvercle en polymère sert de protection à la plaque tout en laissant le passage aux moyens de raccordement.

L'invention a aussi pour objet un procédé de fabrication du module décrit précédemment, comprenant les étapes suivantes :
- on assemble ledit corps intermédiaire avec ledit fond,
- on introduit lesdits générateurs simultanément dans lesdits logements et lesdites ouvertures,
- on fixe lesdits générateurs dans lesdites ouvertures avec ledit moyen de fixation,
- on place ladite plaque de raccordement sur ledit corps intermédiaire en contact électrique avec lesdits générateurs,
- on insère lesdites cartes électroniques dans ladite plaque, et
- on recouvre ladite plaque avec ledit couvercle.

Le corps intermédiaire, éventuellement composé de la réunion de deux coques et comprenant un moyen de refroidissement, est placé sur le fond. Ces deux parties sont solidarisées par exemple à l'aide de clips et/ou de chevilles en plastique qui sont chauffés et aplaties. Les générateurs électrochimiques sont alors enfilés dans les logements qui leurs sont destinés et maintenus au niveau des ouvertures par exemple par serrage de la sangle à l'aide de vis. On vérifie que les générateurs sont tous à la même hauteur et on place la plaque de raccordement électrique sur les générateurs de manière à relier électriquement les générateurs entre eux par l'intermédiaire de leurs bornes et à établir la liaison électrique entre les générateurs électrochimique constituant le module et une application extérieure à alimenter ou un chargeur. Des cartes électroniques de surveillance et de contrôle du fonctionnement du module sont insérées dans la plaque. Ces cartes ont pour rôle de suivre l'évolution de la valeur des paramètres critiques de fonctionnement et de signaler ou éventuellement de déclencher les actions rectificatives en cas de dérive de ceux-ci. Afin de protéger les composants électroniques, un couvercle est placé par-dessus la plaque. Avantageusement le couvercle est équipé de connecteurs qui assurent le relais électrique entre la plaque de raccordement et l'extérieur.

L'invention sera mieux comprise et d'autres avantages et particularités apparaîtront à la lecture de la description qui va suivre, donnée à titre non limitatif, accompagnée des dessins annexés parmi lesquels:
- la figure 1 représente un exemple de réalisation d'un fond selon l'invention,
- la figure 2 est une vue en coupe du corps intermédiaire selon l'invention,
- la figure 3 montre le corps intermédiaire en place sur le fond,
- la figure 4 est une vue de dessus en perspective de la plaque de connexion en place sur le corps intermédiaire,

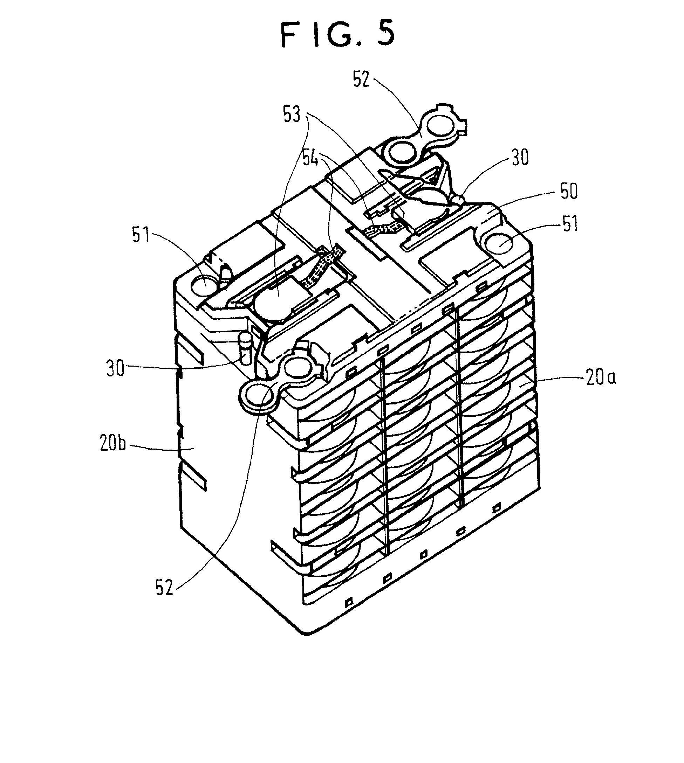

- la figure 5 représente un mode de réalisation d'une enveloppe selon l'invention munie de son couvercle de protection.

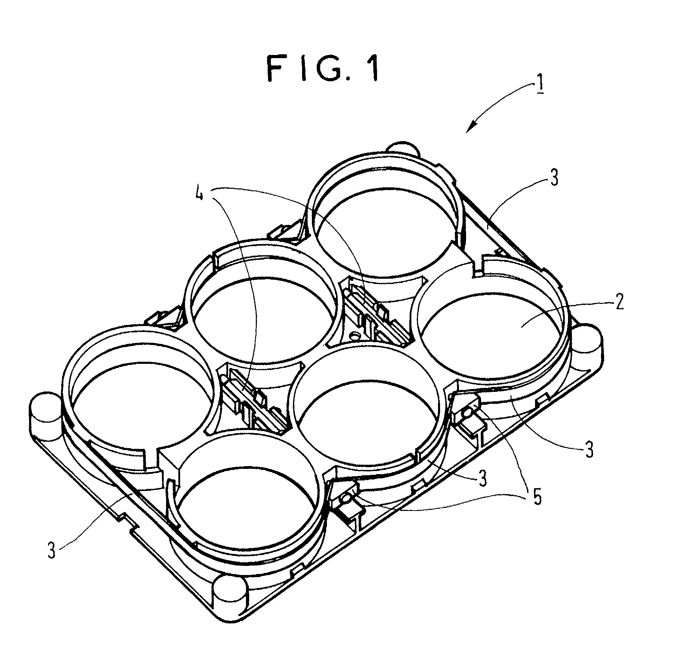

Sur la figure 1 est représenté un fond **1** de module selon l'invention en matériau polymère, notamment un polyamide. Le fond **1** comprend six ouvertures **2** circulaires traversantes dont le diamètre intérieur est sensiblement égal au diamètre extérieur des générateurs électrochimiques cylindriques qu'elles accueillent. Le fond **1** comporte des moyens de fixation des générateurs électrochimiques dans les ouvertures. Ces moyens sont ici constitués par une sangle **3** et d'un moyen de serrage constitué de deux entretoises **4** et quatre vis **5**.

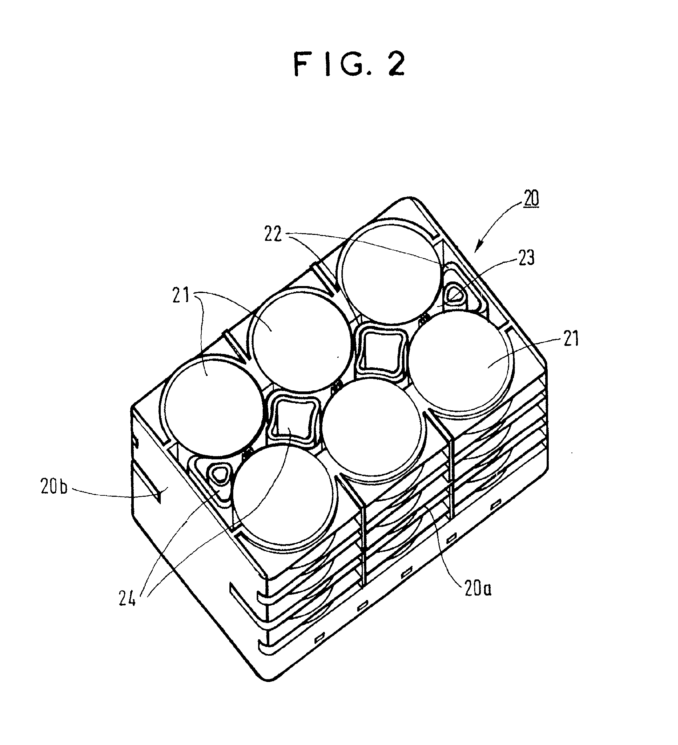

Le corps intermédiaire **20** représenté sur la figure 2 est en matériau polymère, notamment un polypropylène. Le corps intermédiaire **20** est ici composé de deux coques **20a, 20b** qui sont réunies pour former des logements **21** destinés à accueillir six générateurs électrochimiques. Il comprend un système de refroidissement comportant une paroi **22** délimitant un espace fermé **23** à l'intérieur duquel circule par exemple un liquide de refroidissement. A l'intérieur de l'espace fermé **23** on place un limiteur de volume **24** destiné à diminuer la masse de fluide embarqué. Ce limiteur **24** est une pièce polymère obtenue par soufflage étanche. Il permet de plaquer le fluide contre la paroi et limiter ainsi le volume de fluide caloporteur utilisé.

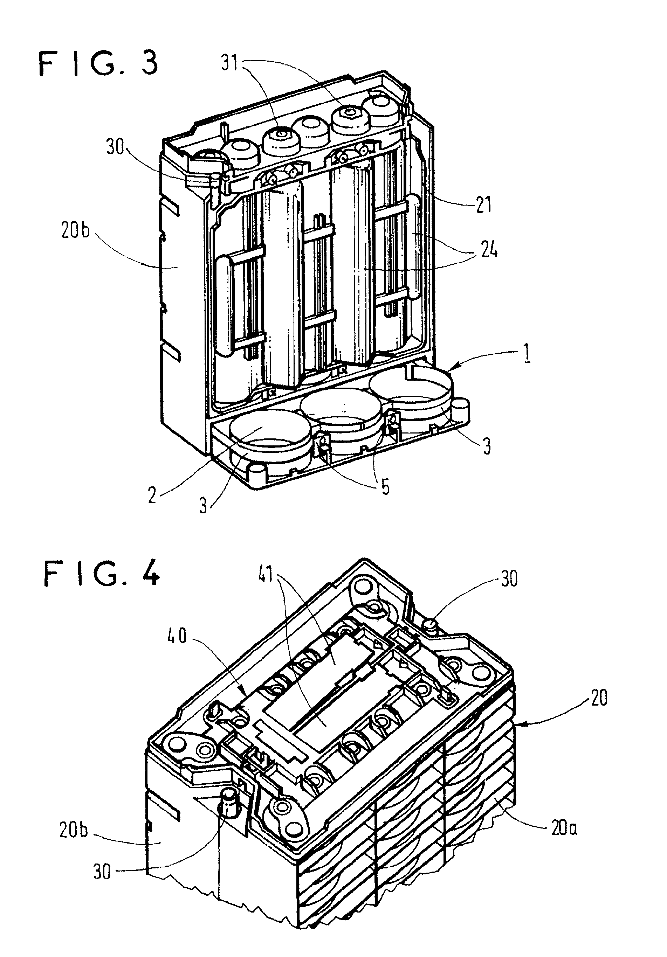

La figure 3 montre le corps intermédiaire **20** assemblé avec le fond **1.** Pour une meilleure compréhension seule la coque **20b** a été représentée Le système de refroidissement est muni de tubulures **30** d'entrée / sortie du liquide de refroidissement. Le limiteur de volume **24** est en place contre la paroi **21.** Une fois le corps intermédiaire **20** et le fond **1** solidarisés, des générateurs électrochimiques cylindriques sont introduits dans des logements **21** ménagé dans le corps intermédiaire **20** et dans les ouvertures **2** du fond **1**. Les générateurs sont maintenus par la mise sous tension grâce aux vis **5** de la sangle **3** venant fixer simultanément les six générateurs à leur base. Sur la figure 3, trois des six générateurs sont en place ; leurs bornes **31** sont apparente à la partie supérieure du corps intermédiaire **20**.

Comme le montre la figure 4, une plaque **40** pour le raccordement électrique est alors posée sur les bornes **31**, et fixée sur les générateurs, pour permettre la connexion de puissance et la prise de tension. Des cartes électroniques **41** pour le contrôle du module sont insérée dans la plaque **40**.

Enfin un couvercle **50** est fixé par des clips par-dessus la plaque **40** pour fermer et rendre la zone puissance / électronique étanche. Le couvercle **50** laisse apparaître quatre bornes **51**, respectivement deux bornes positives et deux bornes négatives, destinées à raccorder électriquement entre eux les modules. Deux d'entre elles portent des barrettes de connexion **52**. Des connecteurs **53** d'où émerge un ruban de fils conducteurs **54** permettent la liaison avec des dispositifs de surveillance et de commande de la batterie.

## Revendications

1. Module comportant au moins deux générateurs électrochimiques placés dans une enveloppe commune, ladite enveloppe comprenant :
- un fond comprenant au moins deux ouvertures de dimension au moins égale à la taille desdits générateurs et un moyen de fixation desdits générateurs dans lesdites ouvertures,
- un corps intermédiaire comprenant des logements pour recevoir lesdits générateurs,
- une plaque pour le raccordement électrique desdits générateurs, et
- un couvercle de protection.

2. Module selon la revendication 1, dans lequel ledit moyen de fixation comprend une sangle et des moyens de serrage de ladite sangle.

3. Module selon la revendication 1, dans lequel lesdits moyens de serrage comprennent au moins une entretoise et au moins une vis.

4. Module selon l'une des revendications précédentes, dans lequel ledit corps intermédiaire comprend des moyens de régulation de la température desdits générateurs.

5. Module selon l'une des revendications précédentes, dans lequel lesdits moyens de régulation de la température comprennent la circulation d'un fluide caloporteur à l'intérieur d'un espace fermé.

6. Procédé de fabrication d'un module selon l'une des revendications précédentes, comprenant les étapes suivantes :
- on assemble ledit corps intermédiaire avec ledit fond,
- on introduit lesdits générateurs simultanément dans lesdits logements et lesdites ouvertures,
- on fixe lesdits générateurs dans lesdites ouvertures avec ledit moyen de fixation,
- on place ladite plaque de raccordement sur ledit corps intermédiaire en contact électrique avec lesdits générateurs,
- on insère des cartes électroniques dans ladite plaque, et
- on recouvre ladite plaque avec ledit couvercle.
